# EUROPÄISCHE PATENTSCHRIFT

(11) **EP 1 031 070 B1**
(45) Veröffentlichungstag und Bekanntmachung des Hinweises auf die Patenterteilung: **15.12.2004**
(21) Anmeldenummer: 99969156.1
(22) Anmeldetag: 10.09.1999
(51) Int. Cl.: G05B 23/02

(54) **VORRICHTUNG UND VERFAHREN ZUM ÜBERWACHEN EINES SIGNALS**
DEVICE AND METHOD FOR MONITORING A SIGNAL
PROCEDE ET DISPOSITIF POUR CONTROLER UN SIGNAL

(30) Priorität: 11.09.1998 DE 19841543
(43) Veröffentlichungstag der Anmeldung: 30.08.2000
(73) Patentinhaber: Gesellschaft für Schwerionenforschung mbH, 64291 Darmstadt (DE)
(72) Erfinder: BADURA, Eugen, D-64291 Darmstadt (DE)
(74) Vertreter: Boeters, Hans Dietrich, Dr.
(86) Internationale Anmeldenummer: PCT/EP1999/006715
(87) Internationale Veröffentlichungsnummer: WO 2000/016176

(56) Entgegenhaltungen:
- DE-A- 3 631 167
- DE-A- 19 508 763
- US-A- 3 775 675
- US-A- 3 800 236
- US-A- 3 889 128
- US-A- 4 423 326
- US-A- 4 577 151
- US-A- 4 665 490
- US-A- 5 055 766

## Beschreibung

Die vorliegende Druckschrift betrifft eine Vorrichtung und ein Verfahren zum Überwachen eines Signals für die Erfassung von Spitzenwerten.

Dazu ist aus der Druckschrift US 5,055,766 eine elektronische Vorrichtung für ein Steuern des Betriebs eines Transformators zur Kompensation von Spannungsfluktuationen in einem Energieverteilungsnetz bekannt. Dazu weist die Vorrichtung eine Reglerschaltung auf, die automatisch die Spannungsbandbreite des Transformators basierend auf einem gespeichertem Spitzenstromwert in dem Verteilungsnetz berechnet. Der Spitzenwert wird automatisch aktualisiert, wenn der Stromwert in der Reglerschaltung den gespeicherten Spitzenstromwert in einer vorgegebenen Zeitspanne überschreitet, was eine Änderung in den Gesamtlastmustern der Reglerschaltung unabhängig von einem Ansteigen des aktuellen Stroms in dem Verteilernetz anzeigt. Die Vorrichtung verhindert somit ein Überschreiten eines voreingestellten Maximums der Ausgangsspannung.

Eine weitere Druckschrift US 3,800,236 befasst sich mit einer Schaltungsanordnung, die ein Eingangssignal relativ zu einer wegdriftenden Basislinie kompensieren soll, wozu ein Spitzendetektor eingesetzt ist. Dazu wird eine Zählvorrichtung mit einem Speicher verbunden, in den die Zählwerte nach jedem Ende eines Messintervalls, solange der Spitzenwertdetektor noch keinen neuen Spitzenwert festgestellt hat, gelesen werden. Dabei findet eine Rückübertragung der Speicherwerte an die Zählvorrichtung statt, die es ermöglicht, eine Kompensation der Basislinie zu bewirken. Dadurch werden Fehler, wie ein Verpassen des Beginns eines neuen Spitzensignals vermieden.

Derartige Vorrichtungen und ein derartiges Verfahren finden in der Messtechnik dort, wo es Signale zu überwachen gilt, die plötzliche, stark überhöhte Spitzenwerte aufweisen. Das Auftreten solcher Spitzenwerte kann bei herkömmlicher Betragsgrößenmessung des Signals zur Übersteuerung der Messeinrichtung und zur Störung der Messung führen.

Dies sei am Beispiel der elektronischen Überwachung der Intensität von Teilchenstrahlen erläutert, die in einem Synchroton erzeugt werden. Wenn ein Teilchenstrahl durch Extraktion aus dem Synchroton erzeugt wird, kann es in seltenen Fällen vorkommen, dass der gesamte momentane Inhalt des Synchrotons - also die Gesamtzahl der im Synchroton vorhandenen Teilchen - innerhalb von wenigen Millisekunden heraustritt. Hierbei können Teilchenintensitäten auftreten, die tausendfach höher als erwartet sind. Diese Situation wird schnelle Extraktion genannt, im Gegensatz zur normalen Extraktion, bei der die Teilchen über einen Zeitraum von mehreren Sekunden heraustreten.

Die schnelle Extraktion kann zu Beschädigung der mit dem Teilchenstrahl beaufschlagten Einrichtungen bzw. Stoffe führen, wenn der Teilchenstrahl nicht hinreichend schnell unterbrochen wird. Besonders wichtig ist dies bei der Behandlung von Menschen im Rahmen der Tumorbehandlung mit Teilchenstrahlen.

Bekannte Vorrichtungen und Verfahren zur Strahlenintensitätsmessung bzw. -kontrolle für die normale Extraktion auf der Basis eines elektrischen Signals sind zwar in der Lage, auch eine schnelle Extraktion festzustellen und einen Unterbrechungsvorgang einzuleiten, doch reagieren diese aufgrund ihrer Hauptaufgabe - der möglichst genauen Messung der Strahlenintensität - nicht schnell genug. Zudem liefern die bekannten Vorrichtungen zur Intensitätsmessung keine Ergebnisse, wenn der Messbereich bei der Messung deutlich überschritten wird.

Ziel der Erfindung ist es daher, eine Vorrichtung und ein Verfahren zum Überwachen eines Signals zu schaffen, welche eine schnelle und zuverlässige Detektierung des Auftritts von Spitzenwerten ermöglichen. Dieses Ziel wird durch eine Vorrichtung und ein Verfahren gemäß den unabhängigen Ansprüchen erreicht. Vorteilhafte Weiterbildungen sind in den Unteransprüchen definiert.

Die erfindungsgemäße Vorrichtung zum Überwachen eines Signals weist einen ersten Detektor, dem eingangsseitig das Signal zugeführt wird und der, wenn das Signal den vorbestimmten ersten Schwellenwert überschreitet, ausgangsseitig ein erstes Überschreitungssignal abgibt, einen zweiten Detektor, dem eingangsseitig auch das Signal zugeführt wird und der, wenn das Signal den vorbestimmten zweiten Schwellenwert überschreitet, ausgangsseitig ein zweites Überschreitungssignal abgibt, einen Differenzierer, dem eingangsseitig auch das Signal zugeführt wird und der ausgangsseitig die Zeitableitung des Signals abgibt, einen dritten Detektor, dem eingangsseitig das zeitabgeleitete Signal zugeführt wird und der ausgangsseitig, wenn das zeitabgeleitete Signal einen vorbestimmten dritten Schwellenwert überschreitet, ein Steigungssignal abgibt, ein erstes UND-Gatter, dem eingangsseitig die Ausgabe des ersten Detektors und die Ausgabe des dritten Detektors zugeführt werden und das ausgangsseitig ein Triggersignal abgibt, wenn eingangsseitig das erste Überschreitungssignal und das Steigungssignal anliegen, einen Signalgenerator, dem eingangsseitig die Ausgabe des UND-Gatters zugeführt wird und der ausgangsseitig die Abgabe eines Fenstersignals einer vorbestimmten Zeitdauer startet, sobald eingangsseitig das Triggersignal anliegt, ein zweites UND-Gatter, dem eingangsseitig die Ausgabe des zweiten Detektors und die Ausgabe des Signalgenerators zugeführt werden und das ausgangsseitig ein Spitzen-Detektionssignal erzeugt, wenn eingangsseitig das zweite Überschreitungssignal und das Fenstersignal anliegen.

Bei dem erfindungsgemäßen verfahren werden zum Überwachen eines Signals folgende Schritte zyklisch durchlaufen: Bestimmen der Amplitude des Signals; wenn die Amplitude des Signals innerhalb einer vorbestimmten Zeit einen vorbestimmten Wert übersteigt, Abgeben eines Spitzen-Detektionssignals.

In einer weiteren Ausgestaltung des erfindungsgemäßen Verfahrens zum Überwachen eines Signals werden folgende Schritte zyklisch durchlaufen: Feststellen, ob das Signal einen vorbestimmten ersten Schwellenwert überschreitet, und, wenn das Signal den vorbestimmten ersten Schwellenwert überschreitet, Starten der Erzeugung eines Fenstersignals vorbestimmter Zeitdauer, Feststellen, ob das Signal einen vorbestimmten zweiten Schwellenwert überschreitet, und, wenn das Signal den vorbestimmten zweiten Schwellenwert überschreitet, Erzeugen eines Überschreitungssignals, Abgeben eines Spitzen-Detektionssignals, wenn sowohl das Fenstersignal als auch das Überschreitungssignal vorhanden sind. Der I/V-Verstärker ist ein Bestandteil des Therapieaufbaus und dient als Strom-Spannungs-Wandler.

Die erfindungsgemäße Vorrichtung und das erfindungsgemäße Verfahren sind mit einer Reihe von Vorteilen verbunden. Da die Vorrichtung und das Verfahren auf Meßeinrichtungen gestützt sind, die bereits zur Intensitätsüberwachung der normalen Extraktion eingesetzt werden, sind keine zusätzlichen Signalgewinnungseinrichtungen notwendig. Es werden die für die normale Intensitätsmessung gewonnenen Signale ausgewertet. Dadurch wird auch jegliche zusätzliche Beeinflussung des Strahles und der normalen Intensitätsmessung vermieden. Die normale Intensitätsmessung und die erfindungsgemäße Überwachung können daher parallel zueinander durchgeführt werden. Aufgrund des Prinzips der Erfassung der Änderung des Signals sind Vorrichtung und Verfahren gemäß der Erfindung besonders schnell, so daß sie in Echtzeit arbeiten können.

In der Ausgestaltung der Erfindung gemäß Anspruch 2 bzw. 8 ist das Erfassen der Richtung der Flanken des zu überwachenden Signals vorgesehen. Diese Maßnahme ist vorteilhaft für einen Anwendungsfall, bei dem Spitzenwerte im zu überwachenden Signal auch innerhalb kurzer Zeit nacheinander auftreten können, etwa derart, daß ein erster, möglicherweise unkritischer Spitzenwert noch nicht ganz abgeklungen ist und das Signal bereits in Richtung eines nächsten, nunmehr kritischen Spitzenwerts ansteigt. Dann kann eine neue Anstiegsmessung stattfinden, obwohl das Signal die erste (untere) Schwelle nicht unterschritten hatte.

Die Erfindung wird anhand von Ausführungsbeispielen und der Zeichnung näher beschrieben. In der Zeichnung zeigt
- Fig. 1: ein Blockschema einer Vorrichtung zum Überwachen eines Signals gemäß dem ersten Ausführungsbeispiel der Erfindung,
- Fig. 2: ein Blockschaltbild der Vorrichtung von Fig. 1,
- Fig. 3: Signalverläufe bei einem Verstärker,
- Fig. 4: den typischen Verlauf eines zu überwachenden Signals im Diagramm (a) und einen Ausschnitt davon im Diagramm (b),
- Fig. 5: ein Blockschema einer Vorrichtung zum Überwachen eines Signals gemäß dem zweiten Ausführungsbeispiel der Erfindung,
- Fig. 6: ein Blockschaltbild der Vorrichtung gemäß Fig. 5,
- Fig. 7: Signalverläufe an bestimmten Komponenten der Vorrichtung gemäß Fig. 5 und
- Fig. 8: zeigt einen Echtzeit-Signalverlauf.

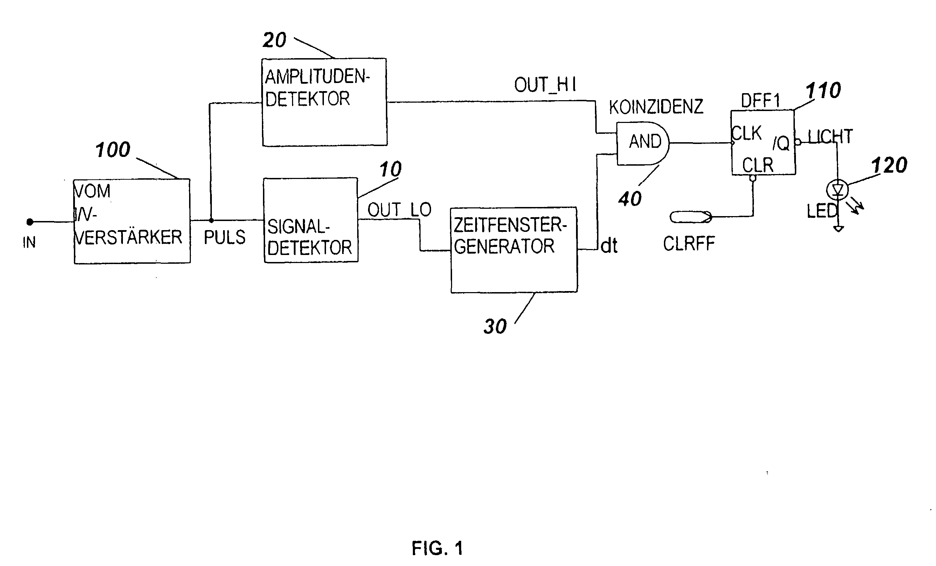

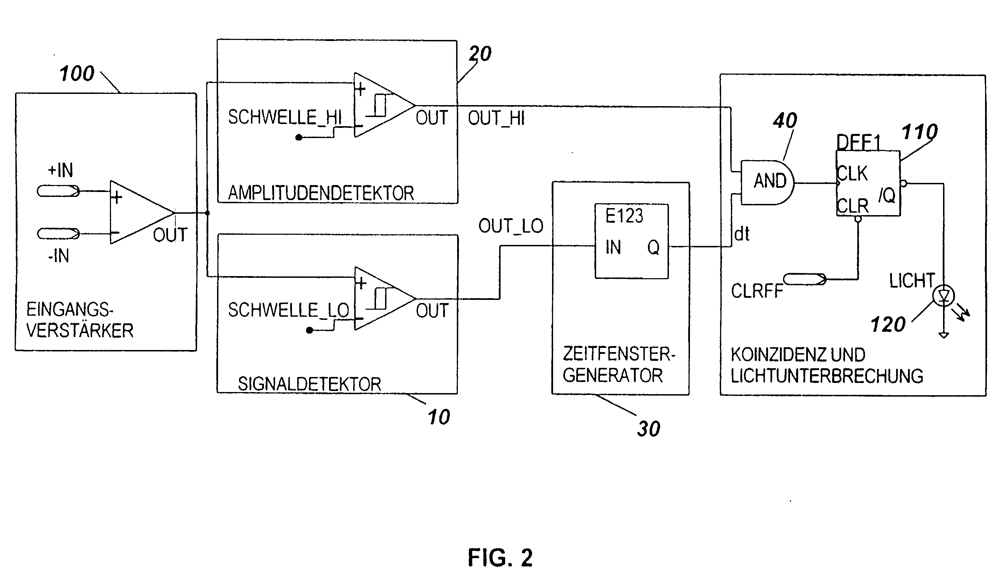

Fig. 1 zeigt ein Blockschema einer Vorrichtung zum Überwachen eines Signals gemäß dem ersten Ausführungsbeispiel der Erfindung, Fig. 2 zeigt ein Blockschaltbild hierzu. Die Vorrichtung findet Anwendung zur Überwachung der Strahlintensität in einer Schwerionen-Bestrahlungseinrichtung für die Tumorbehandlung.

Das für die Überwachung der Strahlintensität auszuwertende Signal stellt einen Intensitätsverlauf des Teilchenstrahles über der Zeit dar. Dieses Signal wird von einer Ionisationskammer geliefert, die in dem Strahlenweg des Teilchenstrahles angeordnet ist. Die dort hindurchtretenden Teichen erzeugen elektrische Ladungen, deren Größe ein Maß für die Anzahl der Teichen bzw. der Intensität ist.

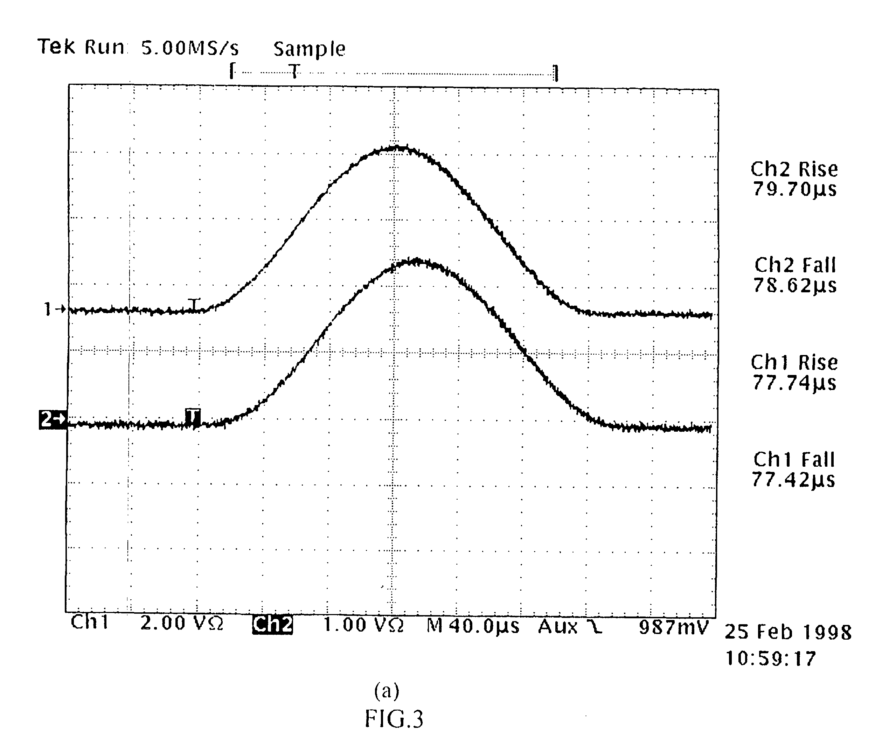

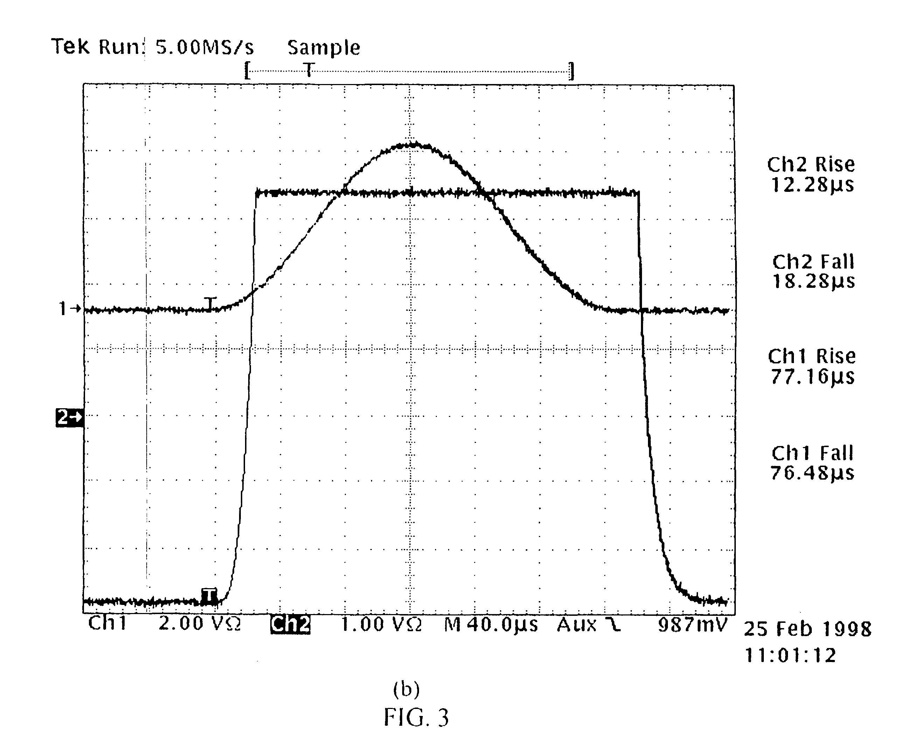

Fig. 3 (a) zeigt einen typischen Verlauf dieses Signals über einer in Sekunden geteilten Abszisse; Fig. 3 (b) zeigt einen Abschnitt des Signals im Zeitbereich um den Spitzenwert in höherer Zeitauflösung.

Das von der Ionisationskammer gelieferte zu überwachende Ladungssignal wird einem Strom/Spannungsverstärker 100 am Eingang der Überwachungsvorrichtung zugeführt. Der Strom/Spannungsverstärker 100 dient zur eingangsseitigen Trennung der Überwachungsvorrichtung von einer (hier nicht gezeigten) Vorrichtung zur Strahlintensitätsmessung, der dasselbe Signal zugeführt wird. Nach dem Verstärker 100 wird das Signal in zwei Zweige geleitet. Im einen Zweig ist ein Signaldetektor 10 angeordnet, der das vom Eingang gelieferte Signal größenmäßig mit einem niedrigen Schwellenwert vergleicht. Dieser Signaldetektor hat die Aufgabe, festzustellen, ob ein von Null ungleiches Intensitätssignal angeliefert wird, d.h. ob überhaupt ein Teilchenstrahl vorhanden ist. Der Signaldetektor 10 ist als Komparator ausgestaltet, der ein hochpegeliges Signal (logisch "1") an seinem Ausgang abgibt, wenn das Eingangssignal größer oder gleich dem Schwellenwert *Schwelle_LO* ist, ansonsten aber kein Signal abgibt (logische "0"). Der Ausgang des Signaldetektors 10 ist mit dem Eingang eines Signalgenerators 30 verbunden. Der Impulsgenerator 30 erzeugt ein hochpegeliges Ausgangssignal einer vorbestimmten Dauer - öffnet also ein Zeitfenster -, sobald ein hochpegeliges Signal an seinem Eingang anliegt; der Signalgenerator 30 wird somit durch den Signaldetektor 10 getriggert.

Im anderen Zweig ist ein Amplitudendetektor 20 angeordnet, der das vom Eingang gelieferte Signal größenmäßig mit einem hohen Schwellenwert *Schwelle_HI* vergleicht. Der Amplitudendetektor 20 ist auch als Komparator ausgestaltet, der ein hochpegeliges Signal abgibt, wenn das Eingangssignal größer oder gleich dem Schwellenwert *Schwelle_HI* ist. Der Schwellenwert *Schwelle_HI* ist hierbei so gewählt, daß er nur wenig unterhalb der maximalen Ausgangsspannung (der Aussteuerungsgrenze) des Eingangsverstärkers 100 liegt. Der Ausgang des Impulsgenerators 30 und der Ausgang des Amplitudendetektors 20 werden dem UND-Gatter 40 zugeführt, das ein hochpegeliges Signal abgibt, wenn beide Eingänge hochpegelig sind. Dieses Signal steuert eine Reaktionsvorrichtung 110 an, die eine Gegenmaßnahme, etwa die sofortige Unterbrechung des Teilchenstrahles auslöst. Hier ist die Reaktionsvorrichtung durch ein Flip-Flop symbolisiert, welches den Strom für die nachgeschaltete Leuchtdiode 120 unterbricht.

Wenn also am Eingang der Überwachungsvorrichtung ein Signal anliegt, wird ein Fenster bestimmter Zeitdauer geöffnet. Wächst das Signal innerhalb dieser Zeitdauer nur "zulässig schwach" an, so liegt der Fall der normalen Extraktion vor, und es erfolgt keine Maßnahme am Teilchenstrahl - das Zeitfenster wird wieder geschlossen, während das Signal unterhalb den Schwellenwert *Schwelle_LO* abfällt. Wächst hingegen das Signal innerhalb der durch das Zeitfenster vorgegebenen Zeitdauer mehr als zulässig an - d.h. auf oder über den Wert *Schwelle_HI* -, so ist davon auszugehen, daß das zu überwachende Signal einen unerwünschten Verlauf annimmt, was bei der Teilchenstrahlung eine schnelle Extraktion bedeutet. In diesem Fall wird eine sofortige Reaktion eingeleitet, hier die Unterbrechung des Ausgangssignals "LICHT" durch Flip-Flop 110. Es muß also der tatsächliche Spitzenwert des Signals nicht gemessen werden, vielmehr reicht es aus, den Anstieg des Signals zu Beginn der schnellen Extraktion zu erfassen. Demnach reicht es aus, wenn der Verstärker 100 am Eingang so weit ausgesteuert werden kann, daß er den innerhalb der vorgegebenen Zeitdauer maximal zulässigen Signalanstieg (also bis zum Wert *Schwelle_HI*) gerade noch verstärken kann, ehe er seine Sättigungsgrenze erreicht. Dies vereinfacht die Dimensionierung des Verstärkers hinsichtlich des Verstärkungsfaktors und des Sättigungsbereiches einerseits und ermöglicht es andererseits, diese beiden Parameter im Hinblick auf eine möglichst genaue Intensitätsmessung der normalen Extraktion einzustellen.

Fig. 3 veranschaulicht die Verhältnisse an einem derartigen Verstärker. Kurve 1 stellt jeweils das Eingangssignal dar, Kurve 2 das Ausgangssignal über der Zeit. Im Bild (a) arbeitet der Verstärker für das gesamte Eingangssignal linear - entsprechend dem Fall der normalen Extraktion-, während der Verstärker im Bild (b) 100fach übersteuert ist; das Ausgangssignal erreicht bereits kurz nach dem Anstieg die Sättigungsgrenze. Dies entspricht dem Fall der schnellen Extraktion. Die Sättigungsgrenze entspräche also etwa dem Schwellenwert *Schwelle_HI*.

Die Vorrichtung gemäß dem ersten Ausführungsbeispiel (Fig. 1 und 2) ist auf die Überwachung von Signalen zugeschnitten, die zwischen zwei Spitzenwerten wieder völlig auf Null (bzw. unterhalb die *Schwelle_LO*) abfallen. Wenn jedoch ein Signal zu überwachen ist, bei welchem ein Spitzenwert einem vorherigen in so kurzem Zeitabstand nachfolgen kann, daß das Signal nicht auf Null abfällt, so würde der Zeitfenster-Generator nicht ausgelöst, und eine erneute Anstiegsmessung unterbliebe.

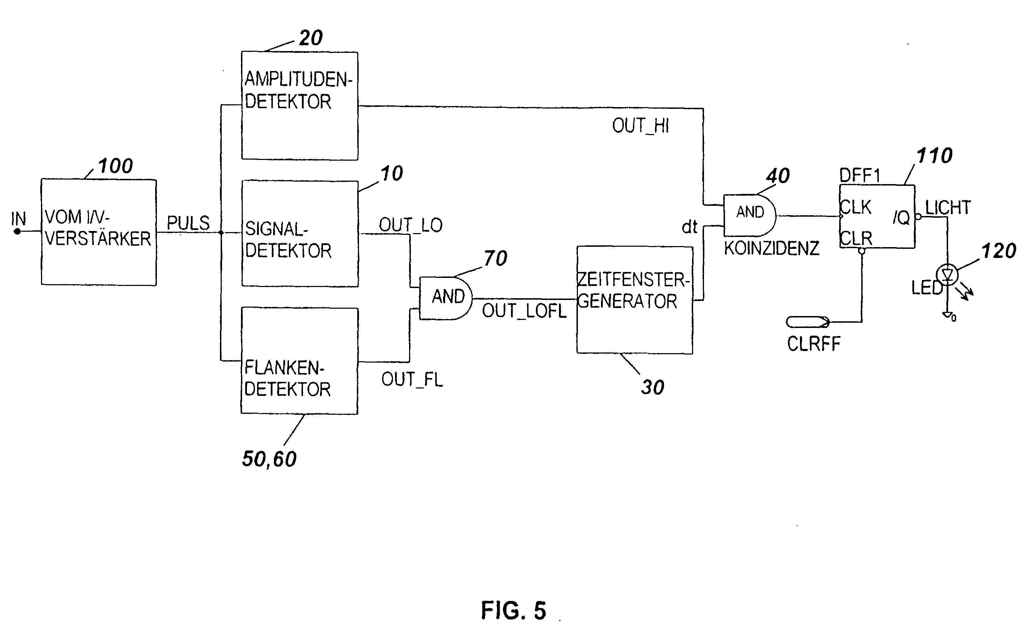

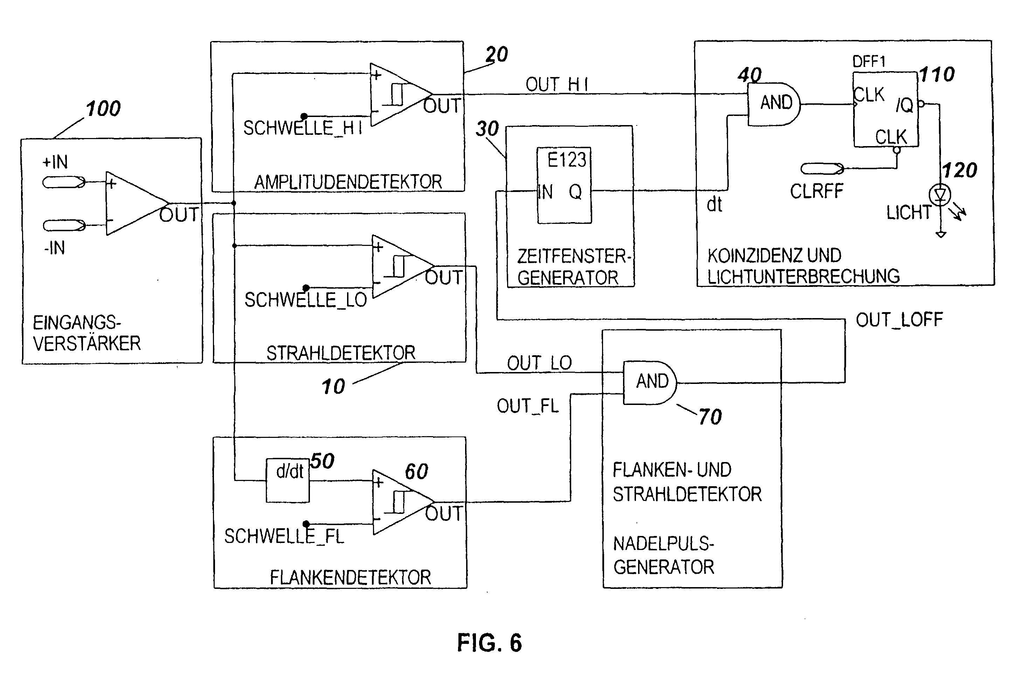

Für diesen Fall wird die Überwachungsvorrichtung, wie das zweite Ausführungsbeispiel gemäß Fig. 5 und 6 zeigt, um einen Flankendetektor 50, 60 erweitert, dem ebenfalls das zu überwachende Signal nach dem Eingangsverstärker 100 zugeführt wird. Der Flankendetektor besteht aus einem Differenzierglied 50 und einem nachgeschalteten Komparator 60. Das Differenzierglied bildet die Ableitung des Signals PULS nach der Zeit. Diese Zeitableitung wird in dem Komparator 60 mit einem Schwellenwert *Schwelle_FL* verglichen. Der Komparator gibt hochpegelige Einzelimpulse (logische "1") ab, wenn die Zeitableitung größer als der Schwellenwert ist. Der Ausgang des Flankendetektors 50, 60 wird durch das UND-GATTER 70 mit dem Ausgang des Signaldetektors 10 UND-verknüpft. Der Ausgang dieses UND-Gatters 70 ist mit dem Zeitfenster-Generator 30 verbunden, triggert also diesen. Die übrige Gestaltung der Vorrichtung entspricht der in Verbindung mit den Figuren 1 bis 3 beschriebenen.

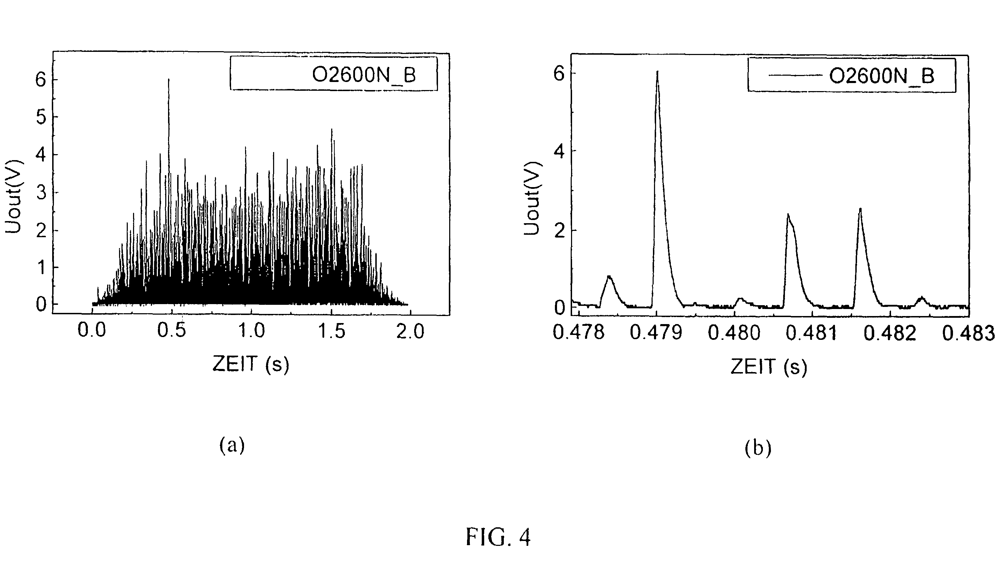

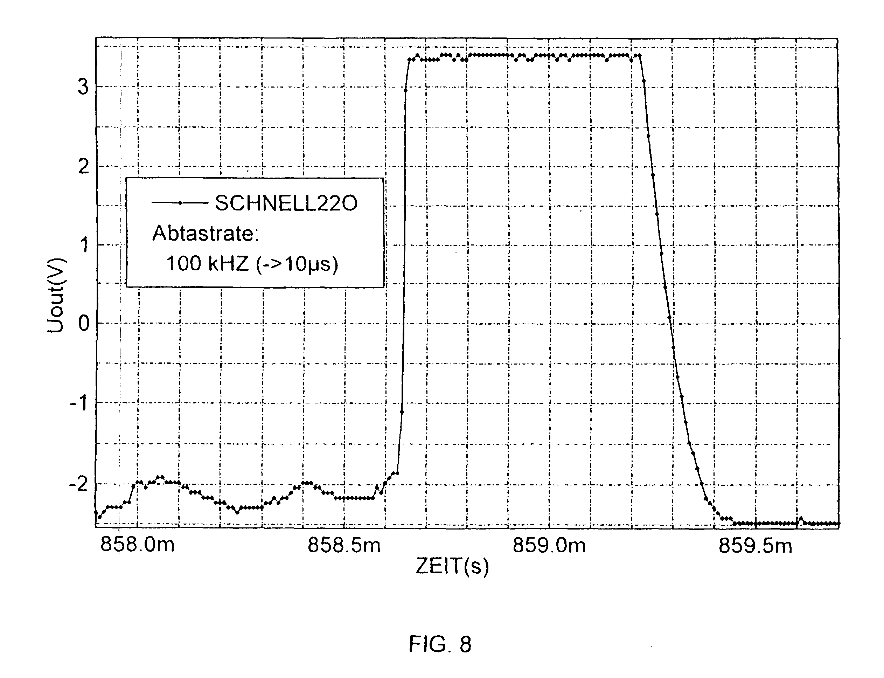

Fig. 8 zeigt die Abbildung eines echten Signals, das von der experimentell erzwungenen schnellen Extraktion erzeugt wird. Bemerkenswert ist die wesentlich kürzere Anstiegszeit im Vergleich mit dem Signal in Fig. 4(b), sowie das durch Übersteuerung des Verstärkers flache Dach eines Signals. Das Prinzip der Vorrichtung basiert auf der Tatsache, daß der Verstärker die für seine Einstellung viel zu großen Signale derart wahrnimmt, als ob deren Anstiegszeit wesentlich kürzer ist als die tatsächlichen Werte.

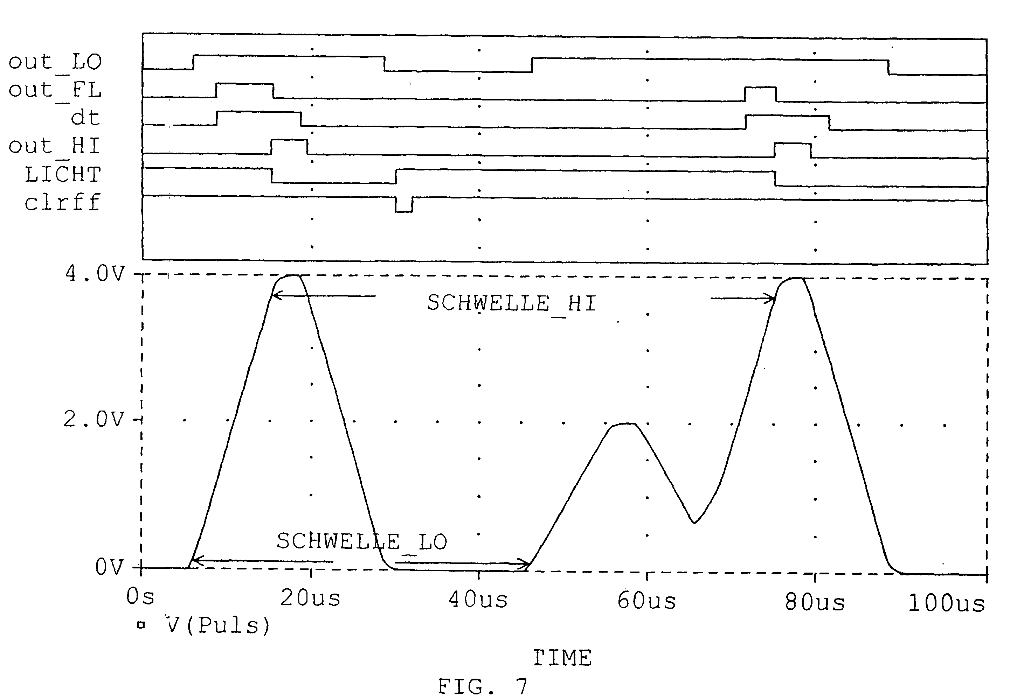

Fig. 7 zeigt im oberen Diagramm Signalpegel bestimmter Komponenten der Schaltung nach Fig. 5 für ein zu überwachendes Signal gemäß unterem Diagramm. Bei ansteigendem Signal (Steigung größer oder gleich *Schwelle_FL*) nimmt der Ausgang des Flankendetektors 50, 60 out_fl einen hohen Pegel an. Wenn das Signal den Schwellenwert *Schwelle_LO* überschreitet, so nimmt der Ausgang out_lo von Signaldetektor 10 einen hohen Pegel an. Nunmehr wird über das UND-Gatter 70 der Zeitfenstergenerator 30 getriggert, dessen Ausgang dt einen Hochpegel bestimmter Zeit abgibt. Während dieser Zeit überschreitet das zu überwachende Signal auch den oberen Schwellenwert *Schwelle_HI*, so daß das Flip-Flop über das UND-Gatter 40 getriggert wird und den Pegel LICHT tiefsetzt.

Nach einer vorbestimmten Zeit wird der Pegel LICHT durch das Signal clrff wieder hochgesetzt. Die zweite Spitze im zu überwachenden Signal erreicht innerhalb des Zeitfensters dt nicht den kritischen Schwellenwert *Schwelle_HI*, so daß innerhalb dieser Zeit keine Reaktion durch das Flip-Flop 110 erfolgt. Vor dem erneuten Ansteigen des Signals zur dritten Spitze fällt es nicht unter den Schwellenwert *Schwelle_LO*; die Information über den Anstieg des Signals wird hier in der Änderung des Ausgangs des Flankendetektors weitergegeben. Der weitere Verlauf entspricht demjenigen bei der ersten Spitze.

Selbstverständlich kann die erfindungsgemäße Vorrichtung auch mit inverser Logik realisiert werden.

Die erfindungsgemäße Vorrichtung und das erfindungsgemäße Verfahren sind nicht auf die beschriebene Anwendung in einer Bestrahlungseinrichtung beschränkt. Vielmehr lassen sie sich überall dort einsetzen, wo es Ereignisse zu überwachen gilt, die als plötzlich auftretende Spitzenwerte in einem Signal repräsentiert werden.

## Patentansprüche

1. Vorrichtung zum Überwachen eines Signals, aufweisend:
einen ersten Detektor (10), dem eingangsseitig das Signal zugeführt wird und der, wenn das Signal den vorbestimmten ersten Schwellenwert überschreitet, ausgangsseitig ein erstes Überschreitungssignal abgibt,
einen zweiten Detektor (20), dem eingangsseitig auch das Signal zugeführt wird und der, wenn das Signal den vorbestimmten zweiten Schwellenwert überschreitet, ausgangsseitig ein zweites Überschreitungssignal abgibt,
**dadurch gekennzeichnet dass**, die Vorrichtung weiterhin aufweist:
einen Differenzierer (50), dem eingangsseitig auch das Signal zugeführt wird und der ausgangsseitig die Zeitableitung des Signals abgibt,
einen dritten Detektor (60), dem eingangsseitig das zeitabgeleitete Signal zugeführt wird und der ausgangsseitig, wenn das Signal einen vorbestimmten dritten Schwellenwert überschreitet , ein Steigungssignal abgibt,
ein erstes UND-Gatter (70), dem eingangsseitig die Ausgabe des ersten Detektors (10) und die Ausgabe des dritten Detektors (60) zugeführt werden und das ausgangsseitig ein Triggersignal abgibt, wenn eingangsseitig das erste Überschreitungssignal und das Steigungssignal anliegen,
einen Signalgenerator (30), dem eingangsseitig die Ausgabe eines UND-Gatters (70) zugeführt wird und der ausgangsseitig die Abgabe eines Fenstersignals einer vorbestimmten Zeitdauer startet, sobald eingangsseitig das Triggersignal anliegt,
ein zweites UND-Gatter (40), dem eingangsseitig die Ausgabe des zweiten Detektors (20) und die Ausgabe des Signalgenerators (30) zugeführt werden und das ausgangsseitig eine Spitzen-Detektionssignal erzeugt, wenn eingangsseitig das zweite Überschreitungssignal und das Fenstersignal anliegen.

2. Vorrichtung gemäß Anspruch 1, bei der die Detektoren jeweils als Komparatoren ausgebildet sind.

3. Vorrichtung gemäß Anspruch 1 oder Anspruch 2 mit einem Verstärker (100) zum Verstärken des Signals am Eingang.

4. Vorrichtung gemäß einem der vorhergehenden Ansprüche, bei der die von den Detektoren jeweils abgegebenen Signale Spannungspegel sind.

5. Verfahren zum Überwachen eines Signals, folgende Schritte zyklisch durchlaufend:
Feststellen, ob das Signal einen vorbestimmten ersten Schwellenwert überschreitet,
Differenzieren des Signals nach der Zeit;
wenn das Signal den vorbestimmten ersten Schwellenwert überschreitet und das differenzierte Signal einen vorbestimmten dritten Schwellenwert überschreitet, Starten des Erzeugens eines Fenstersignals vorbestimmter Zeitdauer, Feststellen, ob das Signal einen vorbestimmten zweiten Schwellenwert überschreitet, und, wenn das Signal den vorbestimmten zweiten Schwellenwert überschreitet, Erzeugen eines Überschreitungssignals, Abgeben eines Spitzen-Detektionssignals, wenn sowohl das Fenstersignal als auch das Überschreitungssignal vorhanden sind.

6. Verfahren gemäß Anspruch 5, bei dem das Signal zunächst verstärkt wird.

7. Verfahren gemäß Anspruch 5 oder Anspruch 6, bei dem die jeweils abgegebenen Signale Spannungspegel sind.

## Claims

1. An apparatus for monitoring a signal, comprising:
a first detector (10) to which the signal is supplied at its input side and which, when the signal exceeds the predetermined first threshold value, emits an exceed signal at its output side,
a second detector (20) to which the signal is also supplied at its input side and which, when the signal exceeds the predetermined second threshold value, emits a second exceed signal at its output side,
**characterised in that** the apparatus further comprises:
a differentiator (50) to which the signal is also supplied at its input side and which emits the time derivative of the signal at its output side,
a third detector (60) to which the time-derived signal is supplied at its input side and which, when the signal exceeds a predetermined third threshold value, emits a rise signal at its output side,
a first AND gate (70) to which the output of the first detector (10) and the output of the third detector (60) are supplied at its input side and which emits a trigger signal
at its output side when the first exceed signal and the rise signal are present at its input side,
a signal generator (30) to which the output of an AND gate (70) is supplied at its input side and which begins to emit a window signal of a predetermined duration at its output side as soon as the trigger signal is present at its input side,
a second AND gate (40) to which the output of the second detector (20) and the output of the signal generator (30) are supplied at its input side and which generates a peak-detection signal at its output side when the second exceed signal and the window signal are present at its input side.

2. An apparatus according to claim 1, wherein the detectors are each constructed as comparators.

3. An apparatus according to claim 1 or claim 2, comprising an amplifier (100) for amplifying the signal at the input.

4. An apparatus according to any one of the preceding claims, wherein the signals emitted by each of the detectors are voltage levels.

5. A method for monitoring a signal, which comprises performing the following steps cyclically:
ascertaining whether the signal exceeds a predetermined first threshold value,
differentiating the signal according to time;
if the signal exceeds the predetermined first threshold value and the differentiated signal exceeds a predetermined third threshold value, starting to generate a window signal of a predetermined duration,
ascertaining whether the signal exceeds a predetermined second threshold value and, if the signal exceeds the predetermined second threshold value, generating an exceed signal, emitting a peak-detection signal if both the window signal and the exceed signal are present.

6. A method according to claim 5, wherein the signal is first amplified.

7. A method according to claim 5 or claim 6, wherein the signals emitted in each case are voltage levels.

## Revendications

1. Dispositif pour contrôler un signal,
comprenant : un premier détecteur (10), auquel le signal est appliqué en entrée et qui, lorsque le signal dépasse la première valeur seuil prédéterminée, délivre en sortie un premier signal de dépassement,
un deuxième détecteur (20), auquel le signal est également appliqué en entrée et qui, lorsque le signal dépasse la deuxième valeur seuil prédéterminée, délivre en sortie un deuxième signal de dépassement,
**caractérisé en ce que** le dispositif comprend en outre :
un amplificateur différentiateur (50), auquel le signal est appliqué en entrée et qui délivre en sortie la dérivée par rapport au temps du signal,
un troisième détecteur (60), auquel est appliqué en entrée le signal dérivé par rapport au temps et qui, lorsque le signal dépasse une troisième valeur seuil prédéterminée, délivre en sortie un signal de montée,
une première porte ET (70), à laquelle sont appliquées en entrée la sortie du premier détecteur (10) et la sortie du troisième détecteur (60) et qui, lorsque le premier signal de dépassement et le signal de montée sont présentés en entrée, délivre en sortie un signal de déclenchement,
un générateur de signal (30), auquel est appliquée en entrée la sortie d'une porte ET (70) et qui, dès que le signal de déclenchement est présenté en entrée, initie en sortie la délivrance d'un signal de fenêtre d'une durée prédéterminée,
une deuxième porte ET (40), à laquelle sont appliquées en entrée la sortie du deuxième détecteur (20) et la sortie du générateur de signal (30) et qui, lorsque le deuxième signal de dépassement et le signal de fenêtre sont présentés en entrée, produit en sortie un signal de détection de crête.

2. Dispositif selon la revendication 1, dans lequel les détecteurs sont réalisés respectivement en tant que comparateurs.

3. Dispositif selon la revendication 1 ou la revendication 2 avec un amplificateur (100) pour amplifier le signal en entrée.

4. Dispositif selon l'une quelconque des revendications précédentes, dans lequel les signaux délivrés respectivement par les détecteurs sont des niveaux de tension.

5. Procédé pour contrôler un signal, les étapes suivantes se déroulant de façon cyclique :
déterminer si le signal dépasse une première valeur seuil prédéterminée,
différencier le signal par rapport au temps ;
lorsque le signal dépasse la première valeur seuil prédéterminée et que le signal différencié dépasse une troisième valeur seuil prédéterminée, initier, la production d'un signal de fenêtre d'une durée prédéterminée, déterminer si le signal dépasse une deuxième valeur seuil prédéterminée et, lorsque le signal dépasse la deuxième valeur seuil prédéterminée, produire un signal de dépassement, délivrer un signal de détection de crête, lorsque tant le signal de fenêtre que le signal de dépassement se présentent.

6. Procédé selon la revendication 5, dans lequel, dans un premier temps, le signal est amplifié.

7. Procédé selon la revendication 5 ou la revendication 6, dans lequel les signaux respectivement délivrés sont des niveaux de tension.
